(19) Europäisches Patentamt
European Patent Office
Office européen des brevets

(11) **EP 1 271 107 B1**

(12) **EUROPÄISCHE PATENTSCHRIFT**

(45) Veröffentlichungstag und Bekanntmachung des Hinweises auf die Patenterteilung:
**19.08.2009   Patentblatt 2009/34**

(51) Int Cl.:
***G01D 5/245*** *(2006.01)*

(21) Anmeldenummer: **02012780.9**

(22) Anmeldetag: **10.06.2002**

(54) **Positionsmesseinrichtung**

Position measuring device

Dispositif de mesure de position

(84) Benannte Vertragsstaaten:
**AT BE CH CY DE DK ES FI FR GB GR IE IT LI LU MC NL PT SE TR**

(30) Priorität: **27.06.2001   DE 10130938**

(43) Veröffentlichungstag der Anmeldung:
**02.01.2003   Patentblatt 2003/01**

(73) Patentinhaber: **Dr. Johannes Heidenhain GmbH 83292 Traunreut (DE)**

(72) Erfinder:
• **Benner, Ulrich**
  **83308 Trostberg (DE)**
• **Holzapfel, Wolfgang**
  **83119 Obing (DE)**

(56) Entgegenhaltungen:
**EP-A- 0 555 507         EP-A- 0 770 850**
**EP-A- 1 081 457         EP-A- 1 111 345**
**DE-A- 19 908 328**

**Beschreibung**

Die vorliegende Erfindung betrifft eine Positionsmesseinrichtung, die insbesondere zur Bestimmung der Absolutposition zweier zueinander beweglicher Objekte geeignet ist. Des weiteren betrifft die Erfindung ein Verfahren zum Betrieb einer Positionsmesseinrichtung.

Eine Kategorie bekannter Positionsmesseinrichtungen zur absoluten Positionsbestimmung umfasst auf Seiten des abgetasteten Maßstabes eine sich in Messrichtung erstreckende Inkrementalspur sowie eine parallel hierzu angeordnete Absolutspur, die z.B. eine serielle Absolutcodierung aufweist. Eine entsprechend aufgebaute Positionsmesseinrichtung ist etwa in der DE 195 05 176 A1 beschrieben. Zur exakten Positionsbestimmung müssen die resultierenden positionsabhängigen Abtastsignale aus den beiden Spuren miteinander synchronisiert werden. Dies ist insbesondere dann kritisch, wenn sich diese Signale in der Größenordnung der jeweiligen Ortsauflösung deutlich voneinander unterscheiden. Zusätzliche Probleme resultieren bei der Verwendung von dünnen Metallbändern auf der Maßstabseite, da deren Parallelausrichtung zur Messrichtung mitunter nicht immer optimal möglich ist. Es ergeben sich Messfehler, wenn beispielsweise eine Verdrehung des Maßstabes um eine Achse vorliegt, die senkrecht zur Maßstaboberfläche orientiert ist.

Zur Lösung dieser Probleme wurde daher in der deutschen Patentanmeldung Nr. 199 62 278.7 der Anmelderin vorgeschlagen, aus der Abtastung einer geeigneten Inkrementalspur mindestens zwei Inkrementalsignale unterschiedlicher Auflösung zu erzeugen. Neben der entsprechenden Ausbildung der abgetasteten Inkrementalspur ist hierzu auch eine entsprechende Ausgestaltung der jeweiligen Detektoranordnungen in der Abtasteinheit erforderlich. In der genannten Patentanmeldung werden zwei geeignete Detektorvarianten zu diesem Zweck vorgeschlagen, mit denen das erläuterte Problem gelöst werden kann, das sich bei eventuellen Verdrehungen der Abtasteinheit bzw. des Maßstabes um eine Achse ergibt, die senkrecht zur Maßstaboberfläche orientiert ist.

Neben unerwünschten Verdrehungen um diese Achse können im Messbetrieb darüber hinaus Nick-Bewegungen der Abtasteinheit oder des Maßstabes um Achsen resultieren, die in der Maßstabebene oder parallel zur Maßstabebene und senkrecht zur Messrichtung orientiert sind. Auch derartige Nick-Bewegungen können bei der Synchronisation der Abtastsignale unterschiedlicher Ortsauflösung zu Fehlern führen, insbesondere wenn die Abtastsignale aus unterschiedlichen Spuren ein unterschiedliches Nick-Verhalten zeigen.

Aus der EP 0 555 507 A1 ist ein codiertes Längenmesssystem bekannt, bei dem der durch Führungsfehler verursachte Kippwinkel der Abtasteinheit gegenüber dem Maßstab über zwei longitudinal angeordnete Inkrementalteilungen ermittelt und ggf. eine fehlerhafte Ablesung der Code-Teilung korrigiert wird. Erfasst wird demzufolge hier ein eventueller Fehler resultierend aus der Verkippung der Abtasteinheit gegenüber dem Maßstab um eine Achse senkrecht zur Maßstabebene. Hinweise zur geeigneten Behebung der diskutierten Probleme bei Nick-Bewegungen sind dieser Druckschrift jedoch nicht zu entnehmen.

In der EP 1 081 457 A2 wird eine optische Positionsmesseinrichtung offenbart, bei der im Abtaststrahlengang eine speziell ausgebildete Projektionsteilung angeordnet ist, über die eine Minimierung der Emfindlichkeit der Abtastung gegenüber Änderungen im Abtastabstand möglich ist. In Bezug auf die Problematik eventueller Nick-Bewegungen sind in dieser Druckschrift keine Hinweise zu finden.

Eine weitere optische Positionsmesseinrichtung wird in der DE 199 08 328 vorgeschlagen. Dies umfasst maßstabseitig zwei unterschiedliche Teil-Messteilungen, die im Verlauf der Abtastung mittels eines abtastseitig vorgesehenen Retroreflektorelements beaufschlagt werden. Auch diesem Dokument sind keine Hinweise auf die Minimierung von eventuellen Fehlern aufgrund von Nick-Bewegungen zu entnehmen.

Aus der EP 0 770 850 A2 ist eine optische Positionsmesseinrichtung bekannt, bei der eine spezielle Ausgestaltung einer maßstabseitigen Referenzmarkierung vorgesehen wird. Die Problematik eventueller Nick-Verkippungen wird in dieser Druckschrift jedoch ebenfalls nicht angesprochen.

Aufgabe der vorliegenden Erfindung ist es daher, eine Positionsmesseinrichtung anzugeben, die stets eine sichere Positionsbestimmung gewährleistet. Des weiteren soll ein Verfahren zum Betrieb einer derartigen Positionsmesseinrichtung angegeben werden.

Diese Aufgabe wird gelöst durch eine Positionsmesseinrichtung mit den Merkmalen des Anspruches 1.

Vorteilhafte Ausführungsformen der erfindungsgemäßen Positionsmesseinrichtung ergeben sich aus den Maßnahmen, die in den von Anspruch 1 abhängigen Patentansprüchen aufgeführt sind.

Des weiteren wird diese Aufgabe gelöst durch ein Verfahren zum Betrieb einer Positionsmesseinrichtung mit den Merkmalen des Anspruches 13.

Vorteilhafte Ausführungsformen des erfindungsgemäßen Verfahrens ergeben sich aus den Maßnahmen, die in den von Anspruch 13 abhängigen Patentansprüchen aufgeführt sind.

Erfindungsgemäß ist nunmehr vorgesehen, neben den ersten und zweiten erzeugten Abtastsignalen aus der ersten und zweiten Spur aus einer der beiden abgetasteten Spuren auf dem Maßstab ein drittes Abtastsignal zu erzeugen, welches ein unterschiedliches Nick-Verhalten aufweist wie das andere aus dieser Spur erzeugte Abtastsignal. Beispielsweise weist das dritte Abtastsignal ein ähnliches Nick-Verhalten auf wie das Abtastsignal aus der jeweils anderen Spur.

Aus der Überwachung der aus der gleichen Spur gewonnenen Abtastsignale mit unterschiedlichem Nick-Verhalten, etwa in einer der Positionsmesseinrichtung zugeordneten Vergleichereinheit, lässt sich das Nick-Verhalten des Systems überwachen, regeln etc..

In einem bevorzugten Ausführungsbeispiel umfasst die erfindungsgemäße Positionsmesseinrichtung auf der Maßstabseite eine als Inkrementalspur ausgebildete erste Spur sowie eine parallel hierzu angeordnete Absolutspur als zweite Spur. Auf Seiten der relativ zum Maßstab beweglichen Abtasteinheit sind zwei Inkrementalsignal-Detektoranordnungen sowie eine Absolutpositionssignal-Detektoranordnung vorgesehen. Mit Hilfe der Inkrementalsignal-Detektoranordnungen werden als Abtastsignale erste und zweite Grob-Inkrementalsignale mit der identischen groben Signalperiode erzeugt. Über die Absolutpositionssignal-Detektoranordnung wird aus der Abtastung der Absolutspur ein Absolutpositionssignal erzeugt. Die Erzeugung der beiden Grob-Inkrementalsignale unterscheidet sich dahingehend, dass diese jeweils ein unterschiedliches Nick-Verhalten aufweisen. Dies bedeutet, dass sich die durch unterschiedliche Abtaststrahlengänge erzeugten Abtastsignale im Fall einer eventuellen Nick-Bewegung, d.h. z.B. einer Verkippung von Abtasteinheit und Maßstab um eine Achse, die in der Maßstaboberfläche senkrecht zur Messrichtung verläuft unterschiedlich verhalten. So wird hierbei ein Grob-Inkrementalsignal nicht beeinflusst, während etwa das andere Grob-Inkrementalsignal eine Beeinflussung dahingehend erfährt, dass nicht mehr die korrekte Position angegeben wird.

Das erfindungsgemäß erzeugte dritte Abtastsignal in Form eines zweiten Grob-Inkrementalsignales weist im Fall einer Verkippung von Abtasteinheit und Maßstab z.B. um eine Achse, die in der Maßstaboberfläche senkrecht zur Messrichtung verläuft, ein ähnliches Verhalten auf wie das zweite Abtastsignal, d.h. das Absolutpositionssignal. Dies hat zur Folge, dass die Synchronisation dieser beiden Abtastsignale auch in diesem Fall fehlerfrei möglich ist.

In einer bevorzugten Ausführungsform ist die erfindungsgemäße Positionsmesseinrichtung somit unempfindlich sowohl gegenüber Verdreh-Bewegungen um eine Achse, die senkrecht auf Maßstab orientiert ist wie auch gegenüber Nick-Bewegungen. In allen Fällen ist die präzise absolute Positionsbestimmung aus den erzeugten Abtastsignalen gewährleistet.

Als vorteilhaft erweist sich ferner, dass aus dem Vergleich der beiden Abtastsignale mit unterschiedlichem Nick-Verhalten, also z.B. der erzeugten Grob-Inkrementalsignale, insbesondere aus der Messung der Phasendifferenz, nunmehr auch ein Maß für die Verkippung zwischen der Abtasteinheit und dem Maßstab um eine Nick-Achse abgeleitet werden kann, die z.B. in der Maßstaboberfläche senkrecht zur Messrichtung orientiert ist. Diese Information kann zu verschiedensten weiteren Zwecken ausgewertet werden, wie etwa zur exakten Ausrichtung der Abtasteinheit während der Montage.

In Bezug auf die Ausbildung der Spuren gibt es eine Reihe von Möglichkeiten. So kann die Absolutcodierung in der Absolutspur beispielsweise auch in Form einer oder mehrerer Referenzmarkierungen ausgebildet sein etc..

Die erfindungsgemäße Positionsmesseinrichtung lässt sich selbstverständlich als lineare wie auch als rotatorische Positionsmesseinrichtung ausbilden.

Grundsätzlich lässt sich das der vorliegenden Erfindung zugrundeliegende Prinzip auf jede Positionsmesseinrichtung übertragen, bei der mehrere Spuren auf einem Maßstab abgetastet werden und die aus den verschiedenen Spuren erzeugten Abtastsignale im Fall einer eventuellen Nick-Kippung ein unterschiedliches Verhalten zeigen. Aus einer der Spuren sind dann durch eine entsprechende Abtastung, respektive Ausgestaltung der Abtasteinheit, zwei Abtastsignale mit unterschiedlichem Verhalten bei einer derartigen Nick-Kippung abzuleiten. Der jeweilige Phasenversatz zwischen diesen beiden Abtastsignalen liefert dann ein Maß für die aktuell vorliegende Nick-Kippung und kann im Verlauf der Messung überwacht bzw. geregelt werden.

Weitere Vorteile sowie Einzelheiten der vorliegenden Erfindung ergeben sich aus der nachfolgenden Beschreibung eines Ausführungsbeispieles anhand der beiliegenden Figuren.

Dabei zeigt

Figur 1              eine schematische Darstellung des Abtaststrahlenganges eines Ausführungsbeispieles der erfindungsgemäßen Positionsmesseinrichtung;

Figur 2a und 2b    je eine Draufsicht auf den Maßstab aus Figur 1;

Figur 3              eine Draufsicht auf die Abtastplatte der Positionsmesseinrichtung aus Figur 1;

Figur 4              eine Ansicht der Detektorebene der Abtasteinheit aus Figur 1.

Figur 5a - 5d      verschiedene Darstellungen zur Erläuterung der Verhältnisse auf Seiten der erfindungsgemäßen Positionsmesseinrichtung im Fall einer eventuellen Nick-Bewegung der Abtasteinheit;

Figur 6              eine schematische Teilansicht der erfindungsgemäßen Positionsmesseinrichtung zur Erläuterung verschiedener geometrischer Größen.

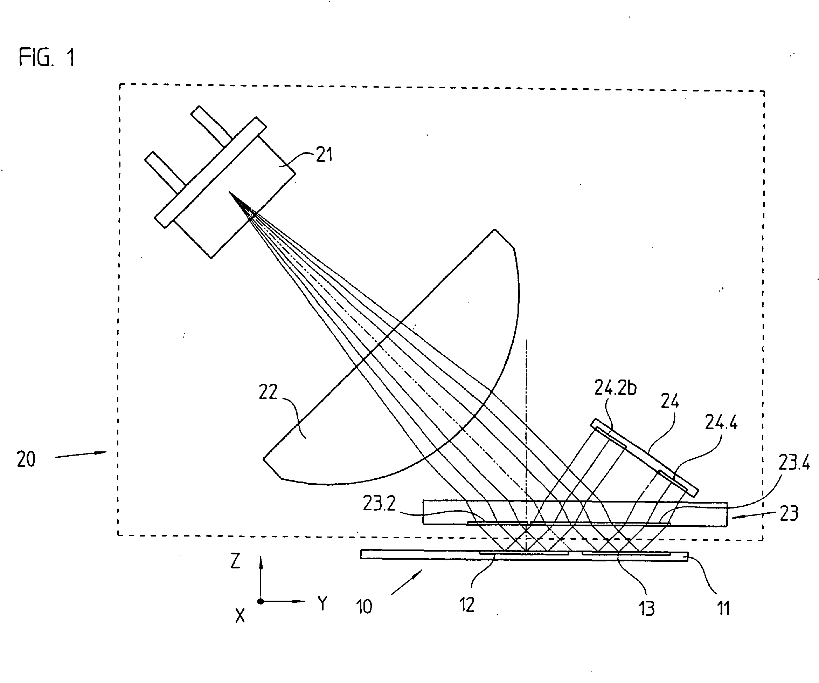

Ein Ausführungsbeispiel der erfindungsgemäßen Positionsmesseinrichtung sei nachfolgend anhand der Figuren 1 - 6 erläutert. Es handelt sich hierbei um eine Vorrichtung zur absoluten Positionsbestimmung.

Figur 1 zeigt den grundsätzlichen Abtaststrahlengang eines Ausführungsbeispieles der erfindungsgemäßen Positionsmesseinrichtung, die als lineares Auflicht-Messsystem ausgebildet ist. Die Positionsmesseinrichtung umfasst einen Maßstab 10, der sich in Messrichtung x erstreckt, sowie eine gegenüber dem Maßstab 10 in Messrichtung x bewegliche Abtasteinheit 20. Die Messrichtung x ist in der Darstellung der Figur 1 senkrecht zur Zeichenebene orientiert. Maßstab 10 und Abtasteinheit 20 sind beispielsweise mit zueinander beweglichen Maschinenteilen verbunden, deren Position zueinander zu bestimmen ist. Hierbei kann es sich etwa um das Werkzeug und das Werkstück einer numerisch gesteuerten Werkzeugmaschine handeln; die von der erfindungsgemäßen Positionsmesseinrichtung erzeugten Signale werden in diesem Fall von einer - nicht dargestellten - Werkzeugmaschinensteuerung weiterverarbeitet.

Der Maßstab 10 der erfindungsgemäßen Positionsmesseinrichtung umfasst in dieser Ausführungsform zwei Spuren 12, 13, die auf einem Maßstabträger 11 angeordnet sind und von der Abtasteinheit 20 zur absoluten Positionsbestimmung abgetastet werden. Die beiden Spuren 12, 13 erstrecken sich in Messrichtung x und bestehen in der dargestellten Auflichtvariante der Positionsmesseinrichtung jeweils aus einer Abfolge von Teilbereichen mit unterschiedlichen Reflexionseigenschaften, nämlich aus Teilbereichen hoher Reflektivität und Teilbereichen geringer Reflektivität.

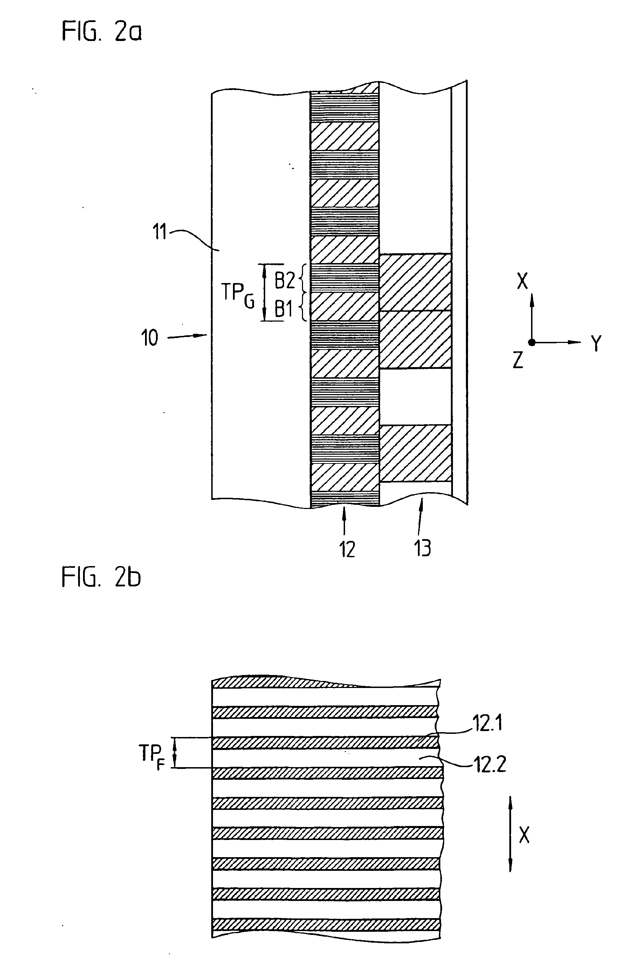

In der Maßstab-Draufsicht der Figur 2a ist die Ausbildung der beiden Spuren 12, 13 des dargestellten Ausführungsbeispieles erkennbar. Eine erste Spur 13, nachfolgend als Absolutspur 13 bezeichnet, weist im vorliegenden Beispiel eine Absolutcodierung in Form eines Pseudo-Random-Codes auf. Der Pseudo-Random-Code besteht aus einer aperiodischen Abfolge von hochreflektierenden und geringreflektierenden Teilbereichen 13.1, 13.2, die jeweils die gleiche Breite in Messrichtung x besitzen. Aus der Abtastung der Absolutspur 13 kann in bekannter Art und Weise als Abtastsignal ein grobes Absolutpositionssignal ABS erzeugt werden, dessen Auflösung für die gewünschte hochpräzise Positionsmessung jedoch noch nicht ausreicht. Selbstverständlich können auch alternative serielle Codierungen in der Absolutspur 13 realisiert sein, wie etwa Block-Codes, Manchester-Codes etc.. Des weiteren ist es aber auch möglich, dass die Absolutspur als Absolutcodierung ein oder mehrere Referenzmarken aufweist, die ebenfalls in bekannter Art und Weise zur Erzeugung eines groben Absolutpositionssignales ABS verwendet werden können.

Unmittelbar benachbart zur Absolut-Spur 13 ist parallel die zweite Spur 12 angeordnet, welche nachfolgend als Inkrementalspur 12 bezeichnet wird. Wie die Absolutspur 13 erstreckt sich die Inkrementalspur 12 ebenfalls in Messrichtung x. Die Inkrementalspur 12 dient zur Erzeugung von Abtastsignalen in Form von höher auflösenden, periodischen Inkrementalsignalen $INC_F$, $INC_{G1}$, $INC_{G2}$, die zur Bestimmung der Relativposition von Maßstab 10 und Abtasteinheit 20 herangezogen werden. Bei den insgesamt drei verschiedenen Inkrementalsignalen $INC_F$, $INC_{G1}$, $INC_{G2}$ handelt es sich im einzelnen um Fein-Inkrementalsignale $INC_F$, erste Grob-Inkrementalsignale $INC_{G1}$ sowie zweite Grob-Inkrementalsignale $INC_{G2}$. In geeigneter Art und Weise werden die verschiedenen Inkrementalsignale $INC_F$, $INC_{G1}$ und $INC_{G2}$ mit den Absolutpositionssignalen ABS der Absolutspur 13 kombiniert, um derart die Absolutposition der zueinander beweglichen Teile zu bestimmen. Hierbei kann die Bestimmung der jeweiligen Absolutposition aus den verschiedenen Abtastsignalen sowohl bereits auf Seiten des Messsystems erfolgen als auch erst in einer nachgeordneten Auswerteeinheit, z.B. in einer numerischen Werkzeugmaschinensteuerung.

Im dargestellten Beispiel werden aus der Abtastung der Inkrementalspur 12 als Abtastsignale die Inkrementalsignale $INC_F$, $INC_{G1}$, $INC_{G2}$ erzeugt. Die Fein-Inkrementalsignale $INC_F$ besitzen die Signalperiode $SP_F$, während die ersten und zweiten Grob-Inkrementalsignale $INC_{G1}$, $INC_{G2}$ jeweils die identische Signalperiode $SP_G$ aufweisen. Die Signalperioden $SP_F$ und $SP_G$ unterscheiden sich üblicherweise deutlich voneinander.

Die abgetastete Inkrementalspur 12 weist zwei unterschiedliche Teilungsperioden $TP_G$, $TP_F$ auf und besteht in diesem Ausführungsbeispiel aus einer periodischen Abfolge von ersten und zweiten Blöcken B1, B2. Durch die Summe der Breiten zweier aufeinanderfolgender Blöcke B1, B2 ist die Teilungsperiode $TP_G$ definiert, die die gröbere der beiden Teilungsperioden $TP_G$, $TP_F$ in der Inkrementalspur 12 darstellt. In dieser Ausführungsform sind die Breiten der beiden Blöcke B1, B2 identisch gewählt; für die Abtastung ist jedoch vor allem die durch die Summe der Breiten definierte grobe Teilungsperiode $TP_G$ von Bedeutung. Je nach Art der Abtastung der Inkrementalspur 12 ist es aber auch möglich, die Blöcke B1, B2 ggf. unterschiedlich breit auszubilden.

Die ersten Blöcke B1 sind geringreflektierend ausgebildet; die zweiten Blöcke B2 bestehen hingegen aus einer periodischen Abfolge von weiteren Teilbereichen 12.1, 12.2 mit gering- und hochreflektierenden optischen Eigenschaften. Eine vergrößerte Ausschnittsdarstellung eines zweiten Blockes B2 ist in Figur 2b dargestellt. Wie aus Figur 2b erkennbar ist, sind die Teilbereiche 12.1, 12.2 in den zweiten Blöcken B2 als schmale rechteckförmige Bereiche ausgebildet, deren Längsachsen sich in y-Richtung in der Maßstabebene erstrecken, d.h. senkrecht zur Messrichtung x orientiert sind. Die verschiedenen Teilbereiche 12.1, 12.2 in den zweiten Blöcken B2 weisen jeweils die gleichen Dimensionen auf. Über die Summe der Breiten zweier aufeinanderfolgender Teilbereiche 12.1, 12.2 in den ersten Blöcken B1 ist die feine Teilungsperiode $TP_F$ der Inkrementalspur 12 definiert, wie dies ebenfalls in Figur 2b veranschaulicht ist.

In der dargestellten Ausführungsform der erfindungsgemäßen Positionsmesseinrichtung ist die feine Teilungsperiode $TP_F$ der Inkrementalspur 12 um den Faktor 8 kleiner gewählt als die gröbere Teilungsperiode $TP_G$ der Inkrementalspur 12, d.h. $TP_G = 160\mu m$ und $TP_F = 20\mu m$.

Grundsätzlich sollte die gröbere Teilungsperiode $TP_G$ der Inkrementalspur 12 als ganzzahliges Vielfaches der feineren Teilungsperiode $TP_F$ gewählt werden. Nur so ist gewährleistet, dass aufeinanderfolgende Blöcke B2 Teile einer durchgehenden Inkrementalteilung mit der feineren Teilungsperiode $TP_F$ darstellen. Es muss demzufolge sichergestellt sein, dass über die gesamte Messlänge hinweg stets geringreflektierende Teilbereiche 12.1 und hochreflektierende Teilbereiche 12.2 alternierend angeordnet sind; insbesondere auch dann, wenn die Inkrementalteilung mit der feineren Teilungsperiode $TP_F$ durch die geringreflektierenden Blöcke B1 unterbrochen wird. So folgt etwa auf einen geringreflektierenden Teilbereich 12.1 am Rand eines Blockes B2 im unmittelbar in Messrichtung benachbarten Block B2 ein hochreflektierender Teilbereich 12.2 usw.. Die Darstellung der Inkrementalspur 12 in Figur 2a zeigt dies im übrigen nicht im Detail.

Auf die gröbere Teilungsperiode $TP_G$ der Inkrementalteilung 12 ist in diesem Ausführungsbeispiel ferner die Bitbreite des Pseudo-Random-Codes der Absolutspur 13 abgestimmt. Dies bedeutet, dass die Breite der Teilbereiche 13.1, 13.2 in der Absolutspur 13 in Messrichtung x identisch zur Teilungsperiode $TP_G$ der Inkrementalspur 12 gewählt ist.

Alternativ zur erläuterten Ausführung des Maßstabes 10 ist es natürlich möglich, die verschiedenen Teilbereiche der beiden Spuren 12, 13 auf dem Maßstabträger 11 mit anderen optischen Eigenschaften auszubilden, also etwa hoch- und geringreflektierende Teilbereiche zu vertauschen.

Darüber hinaus kann grundsätzlich auch vorgesehen werden, die Inkrementalspur derart auszubilden, dass daraus mehr als drei Inkrementalsignale mit verschiedenen Signalperioden gewonnen werden usw..

Die in Figur 1 des weiteren schematisch dargestellte Abtasteinheit 20 umfasst eine Lichtquelle 21, z.B. eine LED, eine Kollimatoroptik 22, eine Abtastplatte 23 sowie eine Detektoreinheit 24 zur Erfassung der verschiedenen Abtastsignale.

Nachfolgend seien die Abtaststrahlengänge zur Erzeugung der Inkrementalsignale $INC_F$, $INC_{G1}$, $INC_{G2}$ sowie der Absolutpositionssignale ABS separat erläutert.

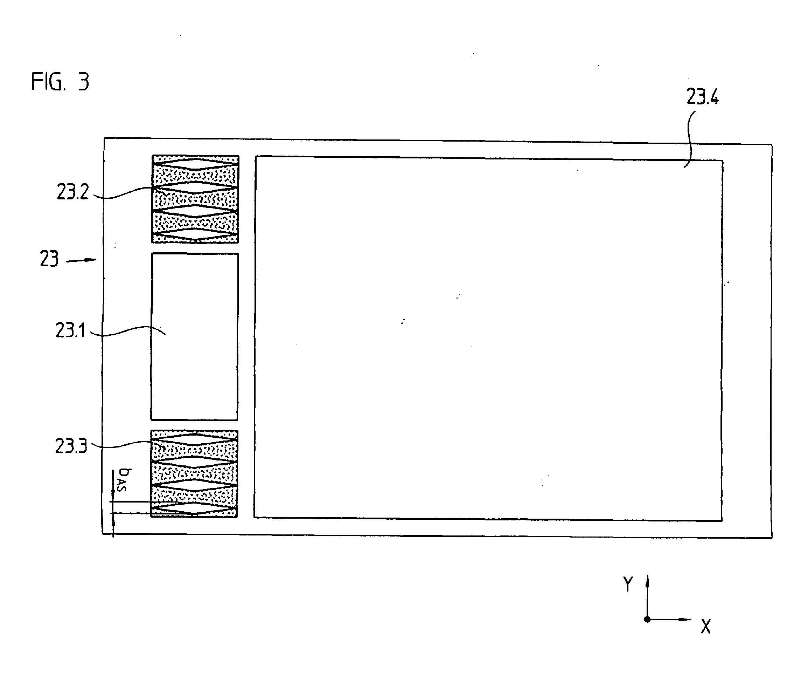

Die von der Lichtquelle 21 emittierten Strahlenbündel, die zur Erzeugung der verschiedenen Inkrementalsignale $INC_F$, $INC_{G1}$, $INC_{G2}$ beitragen, gelangen im dargestellten Beispiel nach der Kollimation über die Kollimatoroptik 22 auf die Abtastplatte 23. Eine Ansicht der Abtastplatte 23 ist in Draufsicht in Figur 3 dargestellt. Auf Seiten der Abtastplatte 23 durchtreten die zur Erzeugung der Inkrementalsignale $INC_F$, $INC_{G1}$, $INC_{G2}$ beitragenden Lichtbündel nunmehr verschiedene Bereiche, je nachdem zu welchen der verschiedenen Inkrementalsignale $INC_F$, $INC_{G1}$, $INC_{G2}$ sie beitragen. Die verschiedenen Bereiche auf der Abtastplatte 23 sind des weiteren auch bestimmten Bereichen in der Detektionsebene definiert zugeordnet, in denen jeweils ein Vernier-Streifensystem erzeugt wird.

So durchtreten die letztlich zur Erzeugung der Fein-Inkrementalsignale $INC_F$ und der ersten Grob-Inkrementalsignale $INC_{G1}$ genutzten Lichtbündel den mit dem Bezugszeichen 23.1 bezeichneten, transparenten Fensterbereich der Abtastplatte 23. Die zur Erzeugung der zweiten Grob-Inkrementalsignale $INC_{G2}$ genutzten Lichtbündel durchtreten hingegen die beiden Bereiche, in denen jeweils eine Abtaststruktur 23.2, 23.3 angeordnet ist. Die Abtaststrukturen 23.2, 23.3 sind jeweils als in Messrichtung x periodisch ausgebildete durchlässige und undurchlässige Teilbereiche ausgebildet. Die durchlässigen Teilbereiche der Abtaststrukturen 23.2, 23.3 sind in der Darstellung der Figur 3 in etwa rautenförmig ausgebildet; im Idealfall weisen die durchlässigen Teilbereiche jedoch sinusförmige Außenkonturen auf. Bzgl. weiterer Dimensionierungsmaßnahmen auf Seiten der Abtaststrukturen 23.2, 23.3 sei auf die nachfolgende Beschreibung verwiesen.

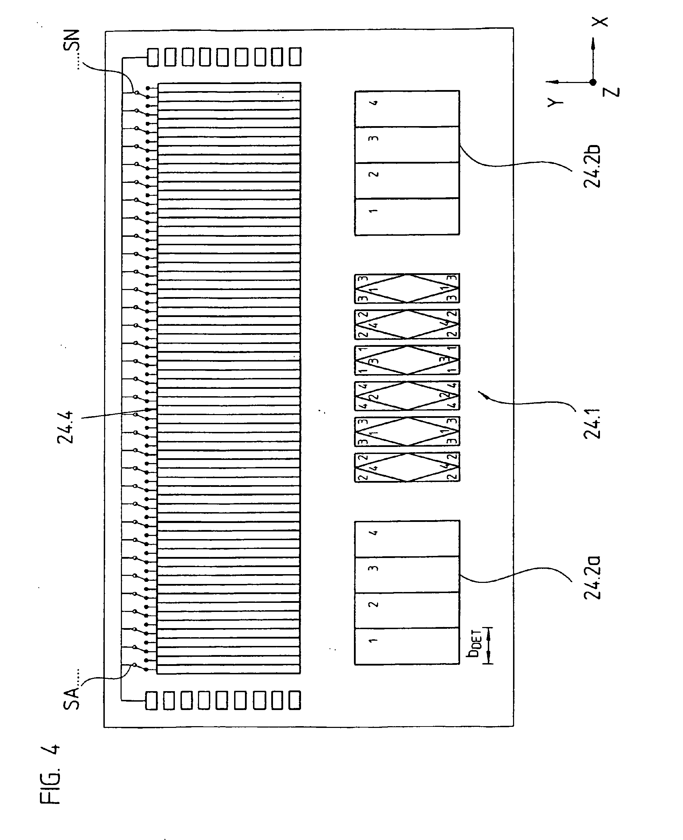

Nach dem Durchlaufen der Abtaststrukturen 23.2, 23.3 bzw. des transparenten Fensterbereiches 23.1 treffen die jeweiligen Strahlenbündel zur Erzeugung der Inkrementalsignale $INC_F$, $INC_{G1}$, $INC_{G2}$ auf die Inkrementalspur 12 auf dem Maßstab 10 und werden von dort wieder in Richtung der Abtastplatte 23 zurückreflektiert. In der Abtastplatte 23 laufen die zurückreflektierten Strahlenbündel durch einen transparenten Fensterbereich 23.4, ehe sie auf die jeweiligen Inkrementalsignal-Detektoranordnungen 24.1, 24.2, 24.3 in der Detektoreinheit 24 auftreffen. In Figur 1 ist lediglich eine der Inkrementalsignal-Detektoranordnungen 24.1, 24.2, 24.3 erkennbar, weshalb in Bezug auf den konkreten Aufbau der Detektoreinheit 24 auf die schematisiert dargestellte Draufsicht auf die Detektorebene in Figur 4 verwiesen sei. Wie aus Figur 4 ersichtlich, ist auf Seiten der Detektoreinheit 24 eine erste Inkrementalsignal-Detektoranordnung 24.1 zur Erzeugung der Fein-Inkrementalsignale $INC_F$ mit der Signalperiode $SP_F$ sowie zur gleichzeitigen Erzeugung der ersten Grob-Inkrementalsignale $INC_{G1}$ mit der Signalperiode $SP_G$ vorgesehen. Des weiteren umfasst die Abtasteinheit 20 erfindungsgemäß mindestens eine zweite Inkrementalsignal-Detektoranordnung 24.2, 24.3 zur Erzeugung der zweiten Grob-Inkrementalsignale $INC_{G2}$, die ebenfalls die Signalperiode $SP_G$ aufweisen. Selbstverständlich wird ausgangsseitig je ein Paar von Inkrementalsignalen erzeugt, wobei diese jeweils um 90° phasenversetzt zueinander sind. In Bezug auf den detaillierten Aufbau der Detektoreinheit 24 sei auf die noch folgende detaillierte Beschreibung der Figur 4 verwiesen.

Diejenigen Strahlenbündel, die in diesem Beispiel zur Erzeugung der groben Absolutpositionssignale ABS genutzt werden, durchtreten nach der Kollimation über die Kollimatoroptik 22 den durchlässigen Fensterbereich 23.4 der Abtastplatte 23 und gelangen auf die Absolutspur 13 auf dem Maßstab 10. Von dort erfolgt eine Rückreflexion in Richtung der Abtastplatte 23, wo die reflektierten Strahlenbündel den transparenten Fensterbereich 23.4 nochmals passieren, ehe diese auf die Absolutpositionssignal-Detektoranordnung 24.4 in der Detektoreinheit 24 auftreffen. Über diesen Strahlengang erfolgt demzufolge in bekannter Art und Weise lediglich eine Abbildung bzw. Schattenprojektion des jeweils gerade erfassten Abschnittes des Pseudo-Random-Codes auf die Absolutpositionssignal-Detektoranordnung 24.4.

Eine Ansicht der Detektorebene der Detektoreinheit 24 ist in schematischer Form in Figur 4 dargestellt. Im oberen Teil ist hierbei die Absolutpositionssignal-Detektoranordnung 24.4 erkennbar, die aus einer Vielzahl einzelner optoelektronischer Detektorelemente besteht, die in Messrichtung x aufeinanderfolgend angeordnet werden. Je zwei benachbarte Detektorelemente dienen im dargestellten Ausführungsbeispiel zur Abtastung eines Bits des Pseudo-Random-Codes in der Absolutspur 13, d.h. es existieren zwei Gruppen von Detektorelementen, welche zum Abtasten der Bits des Pseudo-Random-Codes genutzt werden. Im Messbetrieb wird allerdings nur jeweils eines der beiden Detektorelemente pro Bit ausgelesen, was in Figur 4 über die schematisch angedeuteten Schaltelemente SA - SN über den Detektorelementen veranschaulicht werden soll. Im vorliegenden Ausführungsbeispiel ist somit zwei Detektorelementen, die einer Bitbreite zugeordnet sind, wiederum ein derartiges Schaltelement SA - SN zugeordnet. Hierbei erfolgt das selektive Auslesen des jeweiligen Detektorelementes in Abhängigkeit davon, welche der beiden Gruppen von Detektorelementen näher in der Mitte der jeweiligen Bitfelder des Pseudo-Random-Codes liegt. Um dies zu entscheiden wird im Messbetrieb das Inkrementalsignal $INC_{G1}$ mit der gröberen Signalperiode $SP_G$ herangezogen.

Die in den Detektorelementen der Absolutpositionssignal-Detektoranordnung 24.4 erzeugten Abtastsignale werden jeweils - nicht dargestellten - Triggerelementen zugeführt, die ausgangsseitig Signale mit logischen HIGHund LOW-Pegeln liefern, welche zur absoluten Positionsbestimmung weiterverarbeitet werden. Vorzugsweise sind die Triggerelemente in integrierter Form ebenfalls auf dem Trägersubstrat der Detektoreinheit 24 angeordnet. Zur Erzeugung der Ausgangssignale liegt an den Trigger-Elementen des weiteren ein Referenzsignal an, das entweder einen konstanten Signalpegel aufweist oder aber in bekannter Art und Weise in Abhängigkeit des Signalpegels der Abtastsignale variiert wird. Die Ausgangssignale der Triggerelemente werden einer ebenfalls nicht dargestellten Signalverarbeitungseinheit zugeführt, die diese als auch die erzeugten Inkrementalsignale weiterverarbeitet und ein Ausgangssignal ABS erzeugt, das die gewünschte grobe Absolutposition angibt.

Im unteren Teil der Ansicht der Detektionsebene in Figur 4 sind die beiden Inkrementalsignal-Detektoranordnungen 24.1, 24.2a, 24.2b erkennbar, die in diesem Ausführungsbeispiel zur Abtastung der Inkrementalspur und zur Erzeugung der Inkrementalsignale $INC_F$, $INC_{G1}$, $INC_{G2}$ mit den Signalperioden $SP_F$ und $SP_G$ dienen.

Im einzelnen wird die mittlere erste Inkrementalsignal-Detektoranordnung 24.1 zur Erzeugung der Fein-Inkrementalsignale $INC_F$ und der ersten Grob-Inkrementalsignale $INC_{G1}$ herangezogen. In Bezug auf die Erzeugung dieser Inkrementalsignale $INC_F$, $INC_{G1}$ sei im übrigen auf die bereits erwähnte deutsche Patentanmeldung Nr. 199 62 278.7, insbesondere auf das dort beschriebene zweite Ausführungsbeispiel verwiesen.

Die zweite Inkrementalsignal-Detektoranordnung 24.2a, 24.2b, das zur Erzeugung des zweiten Grob-Inkrementalsignales $INC_{G2}$ herangezogen wird, besteht im vorliegenden Ausführungsbeispiel aus insgesamt zwei separaten Detektoreinheiten 24.2a, 24.2b, die als identische, sog. strukturierte Detektoranordnungen bzw. Detektorelement-Arrays ausgebildet sind. Grundsätzlich könnte im Rahmen der vorliegenden Erfindung die zweite Inkrementalsignal-Detektoranordnung auch lediglich eine einzige derartige Detektoreinheit umfassen.

Die dargestellten Detektoreinheiten 24.2a, 24.2b bestehen in bekannter Art und Weise aus einer Vielzahl einzelner, rechteckförmiger optoelektronischer Detektorelemente, die innerhalb einer Detektoreinheit 24.2a, 24.2b allesamt identisch ausgebildet und in Messrichtung x benachbart zueinander angeordnet sind. Diejenigen Detektorelemente einer Detektoreinheit 24.2a, 24.2b sind jeweils ausgangsseitig miteinander verschaltet, die phasengleiche Abtastsignale liefern. In der gezeigten Ausführungsform wird in den beiden Detektoreinheiten 24.2a, 24.2b jedes Detektorelement miteinander verschaltet, so dass pro Detektoreinheit 24.2a, 24.2b ausgangsseitig insgesamt vier um jeweils 90° phasenversetzte Teil-Inkrementalsignale vorliegen; diese werden zur Erzeugung von zwei um 90° phasenversetzten Grob-Inkrementalsignalen $INC_{G2}$ in bekannter Art und Weise miteinander in Differenz verschaltet, was in Figur 4 nicht dargestellt ist. Der Einfachheit halber wurde oben jeweils nur von einem zweiten Grob-Inkrementalsignal $INC_{G2}$ gesprochen, ebenso erfolgt dies im weiteren Verlauf der Beschreibung.

In der Detektionsebene liegen im Bereich der zweiten Inkrementalsignal-Detektoranordnung 24.2a, 24.2b jeweils periodische Streifenmuster vor, die aus der Wechselwirkung der von der Lichtquelle 21 emittierten Strahlenbündel mit der Inkrementalspur 12 sowie mit den jeweils zugeordneten Abtaststrukturen 23.2, 23.3 in der Abtastplatte 23 resultieren und zur Erzeugung der zweiten Grob-Inkrementalsignale $INC_{G2}$ mit der Signalperiode $SP_G$ genutzt werden. Zu erwähnen ist an dieser Stelle noch, dass die transparenten Bereiche der Abtaststrukturen 23.2, 23.3 in der Abtastplatte 23 in der Messrichtung eine maximale Breite $b_{AS}$ aufweisen, die kleiner als die Breite $b_{DET}$ der zugeordneten Detektorelemente in den strukturierten Detektoranordnungen der zweiten Inkrementalsignal-Detektoranordnung 24.2a, 24.2b ist.

Prinzipiell entspricht die Erzeugung des zweiten Grob-Inkrementalsignales $INC_{G2}$ demzufolge der Erzeugung eines Inkrementalsignales im ersten Ausführungsbeispiel der erwähnten deutschen Patentanmeldung Nr. 199 62 278.7. In Bezug auf Details zu dieser Art der Signalerzeugung sei daher ausdrücklich auf die Offenbarung dieser Druckschrift hingewiesen.

Insbesondere seien in diesem Zusammenhang etwa Maßnahmen auf Seiten der Abtaststrukturen 23.2, 23.3 erwähnt, die eine Filterung unerwünschter Signalanteile am zweiten Grob-Inkrementalsignal $INC_{G2}$ bewirken.

Für eine derartige Filterung ist im dargestellten Beispiel vorgesehen, dass die als Amplitudengitter ausgebildeten Abtaststrukturen 23.2, 23.3 mit Filtereigenschaften versehen ist. Hierzu werden bekannte Filterungsmaßnahmen eingesetzt und beispielsweise die transparenten Teilbereiche der Abtaststrukturen 23.2, 23.3 mit sinusförmigen Öffnungen ausgestaltet, wie dies z.B. aus der GB 2 116 313 A bekannt ist. In der Darstellung der Figur 3 ist diese Formgebung der Abtaststrukturen 23.2, 23.3 aus zeichnerischen Gründen im übrigen lediglich schematisiert angedeutet.

Alternativ hierzu ließe sich eine Filterung unerwünschter Oberwellenanteile auch in bekannter Art und Weise durch geeignete Stegverschiebungen auf Seiten der Abtaststrukturen 23.2, 23.3 sicherstellen usw.. Für die Filterung unerwünschter Signalanteile stehen im Rahmen der vorliegenden Erfindung demnach verschiedene bekannte Maßnahmen zur Verfügung.

Die erläuterte Ausgestaltung der erfindungsgemäßen Positionsmesseinrichtung liefert aus der Abtastung der Inkrementalspur 12 nunmehr ein Fein-Inkrementalsignal $INC_F$ mit der Signalperiode $SP_F$ und die beiden Grob-Inkrementalsignale $INC_{G1}$, $INC_{G2}$ mit der identischen Signalperiode $SP_G$. Durch die Kombination dieser Signale mit dem groben Absolutpositionssignal ABS aus der Absolutspur 13 lässt sich in bekannter Art und Weise die hochauflösende absolute Positionsbestimmung sicherstellen. Hierbei können die verschiedenen Abtastsignale bereits auf Seiten der erfindungsgemäßen Vorrichtung geeignet miteinander verrechnet bzw. kombiniert werden, um die jeweils aktuelle Absolutposition präzise zu bestimmen; ebenso ist es aber auch möglich, die verschiedenen Abtastsignale an eine nachgeordnete Auswerteeinheit zu übertragen, wo die Bestimmung der Absolutposition aus diesen Signalen erfolgt usw..

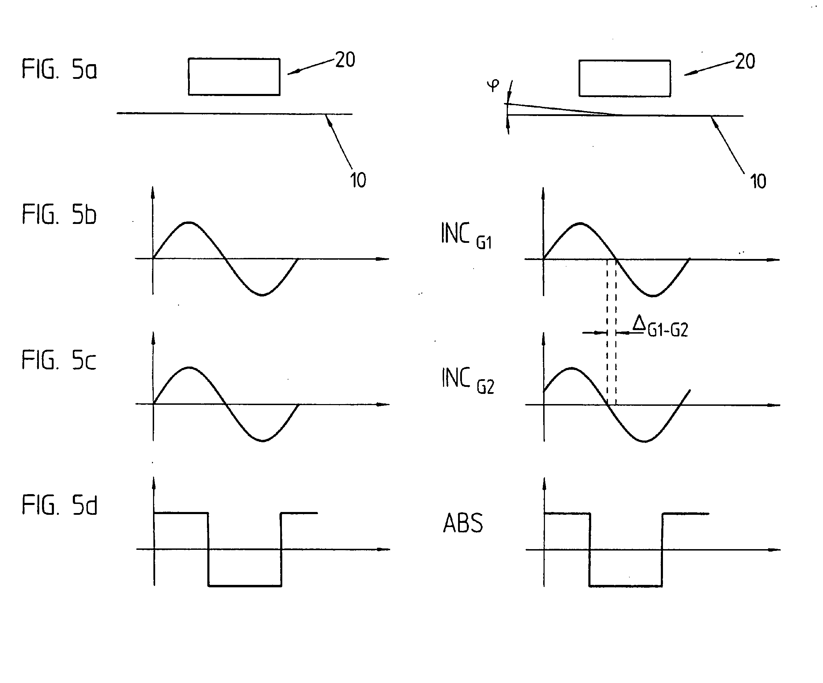

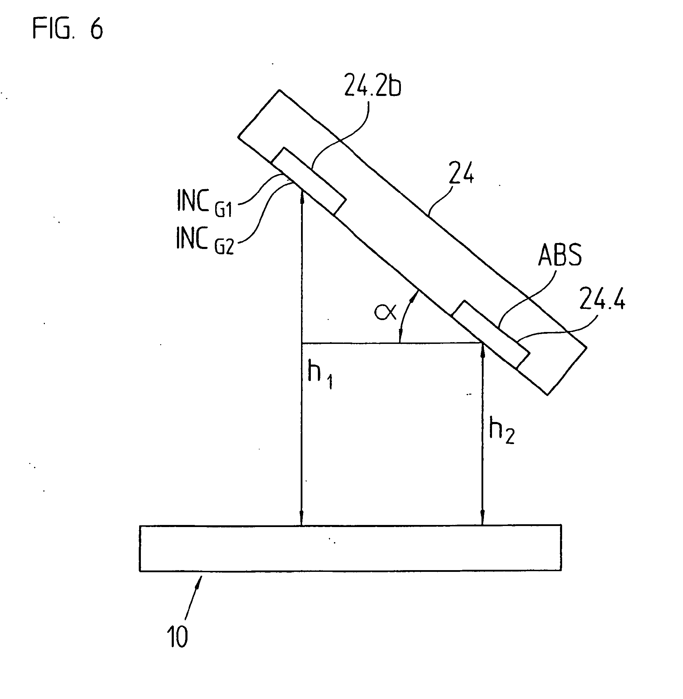

Die erfindungsgemäßen Maßnahmen stellen bei der Verrechnung bzw. Synchronisiation der verschiedenen Abtastsignale $INC_F$, $INC_{G1}$, $INC_{G2}$ und ABS nunmehr sicher, dass auch im Fall einer eventuellen Nick-Bewegung der Abtasteinheit relativ zum Maßstab keine Fehler resultieren. Unter einer Nick-Bewegung bzw. Nick-Kippung sei hierbei eine Verkippung von Maßstab und Abtasteinheit um eine Achse definiert, die in der Maßstabebene oder parallel zur Maßstabebene liegt und senkrecht zur Messrichtung orientiert ist. Zur weiteren Erläuterung sei auf die Figuren 5a - 5d und 6 verwiesen. Hierbei ist in den Figuren 5a - 5d auf der linken Seite der Fall einer korrekten Ausrichtung von Maßstab 10 und Abtasteinheit 20 in Verbindung mit den resultierenden beiden Grob-Inkrementalsignalen $INC_{G1}$, $INC_{G2}$ sowie dem Absolutpositionssignal ABS dargestellt; rechts ist der Fall einer eventuellen Nick-Kippung veranschaulicht.

Aufgrund der Ausgestaltung der Positionsmesseinrichtung ist gewährleistet, dass sich im Fall einer derartigen Nick-Bewegung einerseits das gleiche Verhalten des Fein-Inkrementalsignales $INC_F$ und des ersten Grob-Inkrementalsignales $INC_{G1}$ ergibt; andererseits ist in diesem Fall erfindungsgemäß gewährleistet, dass das zweite Grob-Inkrementalsignal $INC_{G2}$ und das Absolutpositionssignal ABS bei einer eventuellen Nick-Bewegung ein weitgehend ähnliches Verhalten zeigen. Im Fall einer eventuellen Nick-Bewegung resultiert zwischen den beiden Signalen $INC_{G1}$, $INC_{G2}$ ein vom Nickwinkel $\varphi$ abhängiger Phasenversatz $\Delta_{G1-G2}$, in den die relativ geringe Differenz der Höhe der jeweiligen Detektoranordnungen über dem Maßstab eingeht. Die beiden aus einer Spur erzeugten Abtastsignale in Form der beiden Grob-Inkrementalsignale $INC_{G1}$, $INC_{G2}$ weisen demzufolge ein unterschiedliches Nick-Verhalten auf.

Liegt eine ideal-korrekte Ausrichtung der Abtasteinheit und des Maßstabes vor, d.h. insbesondere keine Nick-Kippung, so sind die beiden Grob-Inkrementalsignale $INC_{G1}$, $INC_{G2}$ mit der gleichen Signalperiode phasengleich; dieser Fall ist auf der linken Seite der beiden Figuren 5a und 5b veranschaulicht.

Bei einer eventuellen Nick-Bewegung resultiert jedoch ein Phasenversatz $\Delta_{G1-G2}$ bzw. eine Phasendifferenz zwischen den beiden Grob-Inkrementalsignalen $INC_{G1}$, $INC_{G2}$, wie dies aus dem rechten Teil der Figuren 5b und 5c ersichtlich ist. Der Phasenversatz $\Delta_{G1-G2}$ zwischen den beiden Grob-Inkrementalsignalen $INC_{G1}$, $INC_{G2}$ ist bedingt durch die unterschiedliche Erzeugung bzw. den unterschiedlichen Abtaststrahlengang der beiden Grob-Inkrementalsignale $INC_{G1}$, $INC_{G2}$. So wandert im Fall der Erzeugung des ersten Grob-Inkrementalsignales $INC_{G1}$ bei einer vorliegenden Nick-Kippung das in der Detektionsebene erzeugte Streifenmuster verkippwinkelabhängig aus und zeigt derart eine vermeintliche Positionsänderung an, es resultiert ein Fehler in der Positionsbestimmung. Demgegenüber bleibt bei der Erzeugung der zweiten Grob-Inkrementalsignale $INC_{G2}$ das in der Detektionsebene resultierende Streifenmuster auch bei einer solchen Nick-Kippung nahezu ortsfest auf der jeweiligen Detektoreinheit, d.h. es ergibt sich der korrekte Positionswert auch im Fall einer derartigen Nick-Kippung.

Die gemessene Phasendifferenz $\Delta_{G1-G2}$ zwischen den beiden Grob-Inkrementalsignalen $INC_{G1}$, $INC_{G2}$ kann demzufolge als Maß für eine eventuell vorliegende Nick-Kippung zwischen Maßstab und Abtasteinheit erfasst und geeignet ausgewertet werden. Der Zusammenhang zwischen der Phasendifferenz $\Delta_{G1-G2}$ und dem Nick-Winkel $\varphi$ kann im beschriebenen Ausführungsbeispiel übrigen auch durch geometrische Betrachtungen formelmäßig über die nachfolgende Beziehung angegeben werden:

$$\Delta_{G1-G2} = (2 * \varphi * h_1 * 2\pi) / SP_G \qquad \text{Gl. (1)}$$

bzw.

$$\varphi = (\Delta_{G1\text{-}G2} * SP_G) / (2 * h_1 * 2\pi) \qquad\qquad \text{Gl. (1´)}$$

mit

$\varphi$ := Nick-Winkel/rad
$SP_G$ := Grob-Inkrementalsignalperiode
$h_1$ := Höhe der zweiten inkrementalsignal-Detektoranordnung über dem Maßstab

Zur Bedeutung der verschiedenen Größen sei ergänzend auf die Figur 6 hingewiesen, die eine schematische Teil-Ansicht der erfindungsgemäßen Positionsmesseinrichtung zeigt. In anderen Abtastanordnungen resultieren selbstverständlich andere Beziehungen zwischen der Phasendifferenz und dem jeweiligen Nick-Winkel.

Im Fall einer eventuellen Nick-Kippung um den Nick-Winkel $\varphi$ resultiert auch eine geringfügige Phasendifferenz $\Delta_{G2\text{-}ABS}$ zwischen dem zweiten Grob-Inkrementalsignal $INC_{G2}$ und dem Absolutpositionssignal ABS. Diese lässt sich folgendermaßen angeben:

$$\Delta_{G2\text{-}ABS} = (2 * \varphi * (h_1 - h_2) * 2\pi) / SP_G \qquad\qquad \text{Gl. (2)}$$

Mit $h_2$ wird entsprechend der Darstellung in Figur 6 die Höhe der Absolutpositionssignal-Detektoranordnung 24.4 über dem Maßstab 10 angegeben. Da in Gl. (2) wie ersichtlich lediglich die Differenz aus den beiden Größen $h_1$ und $h_2$ eingeht, liegt im Fall einer Nickbewegung nur eine geringe Phasendifferenz $\Delta_{G2\text{-}ABS}$ vor.

Das Verhalten des Absolutpositionssignales ABS im Fall einer eventuellen Nick-Kippung ist im übrigen in Figur 5d veranschaulicht. Wie daraus hervorgeht erfährt auch das Absolutpositionssignal ABS bei der Nick-Bewegung bedingt durch den entsprechenden Abtaststrahlengang eine Verschiebung, jedoch verhält es sich hierbei lediglich geringfügig anders wie das zweite Grob-Inkrementalsignal $INC_{G2}$. Die Relativlage des Absolutpositionssignales ABS zum zweiten Grob-Inkrementalsignal $INC_G$ bleibt auch im Fall einer Nick-Bewegung in bestimmten Grenzen unverändert.

Im Fall der zur Absolutpositionsbestimmung erforderlichen Synchronisation eines Grob-Inkrementalsignales $INC_{G1}$ oder $INC_{G2}$ und des Absolutpositionssignales ABS muss nunmehr sichergestellt werden, dass eine maximal zulässige Phasenverschiebung zwischen diesen Signalen nicht überschritten wird. Nur dann ist eine korrekte Bestimmung der Absolutposition möglich. Dies kann nunmehr erfindungsgemäß erreicht werden, indem die Phasendifferenz $\Delta_{G1\text{-}G2}$ zwischen den beiden Grob-Inkrementalsignalen $INC_{G1}$, $INC_{G2}$ hinsichtlich einer maximal zulässigen Phasendifferenz $\Delta_{G1\text{-}G2,\,max}$ überwacht wird. Die maximal zulässige Phasenverschiebung $\Delta_{G1\text{-}G2,\,max}$ beträgt im vorliegenden Beispiel eine halbe Signalperiode des Grob-Inkrementalsignales, d.h. $\Delta_{G1\text{-}G2,\,max} = SP_G/2$.

Aus der laufenden Überwachung der Phasendifferenz der beiden Grob-Inkrementalsignale $INC_{G1}$, $INC_{G2}$ mit unterschiedlichen Nick-Empfindlichkeiten, beispielsweise bei der Montage der Positionsmesseinrichtung, kann daher zurückgeschlossen werden, ob die maximal zulässige Phasenverschiebung für die korrekte Synchronisation mit dem Absolutpositionssignal ABS ggf. überschritten wurde. Es ist sichergestellt, dass auch im Fall einer eventuell vorliegenden Nick-Kippung die korrekte Absolutpositionsbestimmung möglich ist.

Eine entsprechende Überwachung und Bestimmung der Phasendifferenz $\Delta_{G1\text{-}G2}$ kann in einer Vergleichereinheit erfolgen, die der Positionsmesseinrichtung zugeordnet ist und über die zur Erfassung einer eventuellen Nick-Kippung die beiden aus einer Spur erzeugten Abtastsignale mit unterschiedlichem Nick-Verhalten miteinander verglichen werden. Eine derartige Vergleichereinheit kann hierbei sowohl auf Seiten der Positionsmesseinrichtung angeordnet sein wie etwa auch auf Seiten einer Auswerteeinheit, die der Positionsmesseinrichtung nachgeordnet ist. Auf Basis des Vergleichsergebnisses erfolgt dann eine Korrektur der räumlichen Ausrichtung von Maßstab und Abtasteinheit, wenn eine maximal zulässige Nick-Kippung überschritten wird. Bei Überschreitung einer maximal zulässigen Nick-Kippung wird ein optisches oder akustisches Warnsignal erzeugt.

Die Überwachung kann hierbei z.B. während der Montage in Form einer unmittelbaren visuellen Anzeige der aktuell ermittelten Phasendifferenz $\Delta_{G1\text{-}G2}$ auf einer geeigneten Anzeigeeinheit erfolgen. Alternativ kann aber auch vorgesehen werden, diesen Vergleich laufend automatisiert durchzuführen und lediglich im Fehlerfall ein Warnsignal zu erzeugen, d.h. also wenn etwa $\Delta_{G1\text{-}G2} > \Delta_{G1\text{-}G2,\,max}$. Ebenso kann aber auch im eigentlichen Messbetrieb diese Phasendifferenz überwacht werden und im Fehlerfall ein geeignetes Warnsignal generiert werden usw..

Im Rahmen der vorliegenden Erfindung existieren neben dem erläuterten Beispiel selbstverständlich noch weitere Ausführungsvarianten.

**Patentansprüche**

1. Positionsmesseinrichtung, bestehend aus einem Maßstab (10) und einer relativ zum Maßstab (10) in einer Messrichtung (x) beweglichen Abtasteinheit (20),

   - wobei auf dem Maßstab (10) mindestens eine erste und eine zweite Spur (12, 13) mit aufeinanderfolgenden Teilbereichen unterschiedlicher Reflektivität angeordnet ist, aus deren Abtastung mit Hilfe der Abtasteinheit (20) ein erstes und ein zweites positionsabhängiges Abtastsignal ($INC_{G1}$, ABS) erzeugbar ist und
   - die Abtasteinheit (20) derart ausgebildet ist, dass aus einer der beiden Spuren (12, 13) ein drittes Abtastsignal ($INC_{G2}$) erzeugbar ist, welches ein unterschiedliches Nick-Verhalten, aufgrund von Nick-Bewegungen der Abtasteinheit (20) oder des Maßstabes (10) um eine Achse, die in der Maßstabebene oder parallel zur Maßstabebene und senkrecht zur Messrichtung (x) orientiert ist, aufweist wie das andere aus dieser Spur (12, 13) erzeugte Abtastsignal ($INC_{G1}$), wozu sich der Abtaststrahlengang zur Erzeugung des dritten Abtastsignals ($INC_{G2}$) vom Abtaststrahlengang zur Erzeugung des anderen, aus dieser Spur (12, 13) erzeugten Abtastsignals ($INC_{G1}$) unterscheidet und
   - der Positionsmesseinrichtung ferner eine Vergleichereinheit zugeordnet ist, die zur Erfassung einer eventuellen Nick-Kippung die beiden aus einer Spur erzeugten Abtastsignale ($INC_{G1}$, $INC_{G2}$) miteinander vergleicht.

2. Positionsmesseinrichtung nach Anspruch 1, wobei das erzeugte dritte Abtastsignal ($INC_{G2}$) ein ähnliches Nick-Verhalten wie das Abtastsignal (ABS) aus der jeweils anderen Spur (12, 13) aufweist.

3. Positionsmesseinrichtung nach Anspruch 1, wobei

   - auf dem Maßstab (10)

      - als erste Spur (13) eine sich in Messrichtung (x) erstreckende Absolutspur (13) mit einer Absolutcodierung angeordnet ist und
      - als zweite Spur (12) eine sich in Messrichtung (x) parallel zur Absolutspur (13) erstreckende Inkrementalspur (12) mit einer Inkrementalteilung angeordnet ist, sowie

   - auf Seiten der Abtasteinheit (20)

      - eine erste Inkrementalsignal-Detektoranordnung (24.1) in einer Detektionsebene angeordnet ist, die zur Erzeugung der ersten Abtastsignale ($INC_{G1}$) in Form von Grob-Inkrementalsignalen ($INC_{G1}$) mit einer groben Signalperiode ($SP_G$) geeignet ist und
      - eine Absolutpositionssignal-Detektoranordnung (24.4) in der Detektionsebene angeordnet ist, die zur Erzeugung der zweiten Abtastsignale (ABS) in Form eines Absolutpositionssignales (ABS) geeignet ist und
      - eine zweite Inkrementalsignal-Detektoranordnung (24.2, 24.3) in der Detektionsebene angeordnet ist, die zur Erzeugung der dritten Abtastsignale ($INC_{G2}$) in Form von zweiten Grob-Inkrementalsignalen ($INC_{G2}$) mit der groben Signalperiode ($SP_G$) geeignet ist und
      - wobei die Abtasteinheit (20) ferner eine Abtastplatte (23) umfasst, die

         - mindestens eine Abtaststruktur (23.2, 23.3) umfasst, die im Abtaststrahlengang der zweiten Inkrementalsignal-Detektoranordnung (24.2, 24.3) zugeordnet ist, und
         - mindestens einen transparenten Fensterbereich (23.1) umfasst, der im Abtaststrahlengang der ersten Inkrementalsignal-Detektor- , anordnung (24.1) zugeordnet ist, so dass die ersten und zweiten Grob-Inkrementalsignale ($INC_{G1}$, $INC_{G2}$) ein unterschiedliches Nick-Verhalten aufweisen.

4. Positionsmesseinrichtung nach Anspruch 3, wobei die Abtastplatte (23) einen weiteren transparenten Fensterbereich (23.4) umfasst, der der Absolutpositionssignal-Detektoranordnung (24.4) zugeordnet ist.

5. Positionsmesseinrichtung nach Anspruch 3, wobei die zweite Inkrementalsignal-Detektoranordnung (24.2, 24.3) mindestens eine Detektoreinheit umfasst, welche in Messrichtung (x) benachbart zur ersten Inkrementalsignal-Detektoranordnung (24.1) angeordnet ist.

6. Positionsmesseinrichtung nach Anspruch 5, wobei die Detektoreinheit als strukturierte Detektoranordnung ausgebildet ist, die aus mehreren rechteckförmigen Detektorelementen besteht, welche phasenverschiedene Teil-Inkrementalsignale liefern.

**7.** Positionsmesseinrichtung nach Anspruch 6, wobei die zweite Inkrementalsignal-Detektoranordnung (24.2, 24.3) zwei identisch ausgebildete Detektoreinheiten umfasst, welche in Messrichtung (x) benachbart zur ersten Inkrementalsignal-Detektoranordnung (24.1) angeordnet sind.

**8.** Positionsmesseinrichtung nach Anspruch 6, wobei die Abtaststruktur (23.2, 23.3) periodisch angeordnete Aperturen umfasst, deren maximale Breite ($b_{AS}$) in Messrichtung (x) kleiner als die Breite ($b_{DET}$) der zugeordneten Detektorelemente in den strukturierten Detektoranordnungen der zweiten Inkrementalsignal-Detektoranordnung (24.2a, 24.2b) gewählt ist.

**9.** Positionsmesseinrichtung nach Anspruch 8, wobei die Aperturen Begrenzungen aufweisen, die dem Verlauf einer Sinusfunktion entsprechen.

**10.** Positionsmesseinrichtung nach Anspruch 3, wobei die Inkremental-Spur (12) auf dem Maßstab (10) eine erste Inkrementalteilung mit einer groben Teilungsperiode ($TP_G$) und eine zweite Inkrementalteilung mit einer feinen Teilungsperiode ($TP_F$) aufweist und die beiden Teilungsperioden ($TP_G$, $TP_F$) in einem ganzzahligen Verhältnis zueinander stehen.

**11.** Positionsmesseinrichtung nach Anspruch 10, wobei die erste Inkrementalsignal-Detektoranordnung (24.1) des weiteren zur Erzeugung von Fein-Inkrementalsignalen ($INC_F$) mit einer feinen Signalperiode ($SP_F$) geeignet ist.

**12.** Verfahren zum Betrieb einer Positionsmesseinrichtung, bestehend aus einem Maßstab (10) und einer relativ zum Maßstab (10) in einer Messrichtung (x) beweglichen Abtasteinheit (20),

   - wobei auf dem Maßstab (10) mindestens eine erste und eine zweite Spur (12, 13) mit aufeinanderfolgenden Teilbereichen unterschiedlicher Reflektivität angeordnet ist, aus deren Abtastung mit Hilfe der Abtasteinheit (20) ein erstes und ein zweites positionsabhängiges Abtastsignal ($INC_{G1}$, ABS) erzeugt werden und
   - die aus den unterschiedlichen Spuren (12, 13) erzeugten ersten und zweiten Abtastsignale ($INC_{G1}$, ABS) im Fall einer Nick-Kippung der Abtasteinheit (20) oder des Maßstabes (10) ein unterschiedliches Nick-Verhalten, aufgrund von Nick-Bewegungen der Abtasteinheit (20) oder des Maßstabes (10) um eine Achse, die in der Maßstabebene oder parallel zur Maßstabebene und senkrecht zur Messrichtung (x) orientiert ist , dahingehend aufweisen, dass das erste Abtastsignal ($INC_{G1}$) dann eine fehlerhafte Position angibt, während das zweite Abtastsignal (ABS) weiterhin eine korrekte Position angibt und
   - dass aus einer der beiden Spuren (12, 13) ein drittes Abtastsignal ($INC_{G2}$) erzeugt wird, welches ein unterschiedliches Nick-Verhalten aufweist wie das andere aus dieser Spur (12, 13) erzeugte Abtastsignal ($INC_{G1}$) und
   - zur Erfassung einer eventuellen Nick-Kippung die beiden aus einer Spur erzeugten Abtastsignale ($INC_{G1}$, $INC_{G2}$) miteinander verglichen werden.

**13.** Verfahren nach Anspruch 12, wobei das dritte erzeugte Abtastsignal ($INCG_2$) ein ähnliches Nick-Verhalten wie das Abtastsignal (ABS) aus der jeweils anderen Spur (12, 13) aufweist.

**14.** Verfahren nach Anspruch 12, wobei zum Vergleich des ersten und dritten Abtastsignales ($INC_{G1}$, $INC_{G2}$) die Phasendifferenz ($\Delta_{G1\text{-}G2}$) aus dem ersten und dritten Abtastsignal ($INC_{G1}$, $INC_{G2}$) gebildet wird.

**15.** Verfahren nach Anspruch 15, wobei die Phasendifferenz ($\Delta_{G1\text{-}G2}$) dahingehend überwacht wird, dass eine maximal zulässige Phasendifferenz ($\Delta_{G1\text{-}G2,\,max}$) nicht überschritten wird.

**16.** Verfahren nach Anspruch 15, wobei die maximal zulässige Phasendifferenz ($\Delta_{G1\text{-}G2,\,max}$) gleich der halben Signalperiode ($SP_G/2$) des ersten Abtastsignales ($INC_{G1}$) gewählt wird.

**17.** Verfahren nach Anspruch 12, wobei auf Basis des Vergleichsergebnisses eine Korrektur der relativen räumlichen Ausrichtung von Maßstab (10) und Abtasteinheit (20) erfolgt, wenn eine maximal zulässige Nick-Kippung überschritten wird.

**18.** Verfahren nach Anspruch 12, wobei ein Warnsignal erzeugt wird, wenn das Vergleichsergebnis die Überschreitung einer maximal zulässigen Nick-Kippung anzeigt.

**Claims**

1. A position measuring device consisting of a scale (10) and a scanning unit (20), which can be displaced in a measuring direction (x) relative to the scale (10),

   - wherein at least a first and a second track (12, 13) comprising consecutive partial areas of different reflectivity are arranged on the scale (10), from the scanning of which track a first and a second position-dependent scanning signal ($INC_{G1}$, ABS) can be generated by means of the scanning unit (20) and
   - the scanning unit (20) is embodied in such a manner that a third scanning signal ($INC_{G2}$) can be generated from one of the two tracks (12, 13), said third scanning signal ($INC_{G2}$), due to pitch displacements of the scanning unit (20) or of the scale (10) about an axis, which is oriented in the scale plane or parallel to the scale plane and at right angles to the measuring direction (x), encompasses a pitch behavior, which is different from the other scanning signal ($INC_{G1}$) which is generated on this track (12, 13), wherefore the scanning light path for generating the third scanning signal ($INC_{G2}$) differs from the scanning light path for generating the other scanning signal ($INC_{G1}$), which is generated on this track (12, 13) and
   - a comparator unit, which compares the two scanning signals ($INC_{G1}$, $INC_{G2}$) , which are generated from one track, with one another for detecting a possible pitch, is furthermore assigned to the position measuring device.

2. The position measuring device according to claim 1, wherein the created third scanning signal ($INC_{G2}$) encompasses a similar pitch behavior as the scanning signal (ABS) from the respective other track (12, 13).

3. The position measuring device according to claim 1, wherein

   - on the scale (10)

     - an absolute track (13) extending in measuring direction (x) and comprising an absolute encoding is arranged as first track (13) and
     - an incremental track (12) extending in measuring direction (x) parallel to the absolute track (13) and comprising an incremental spacing is arranged as second track (12) as well as
   - on the side of the scanning unit (20)

     - a first incremental signal detector arrangement (24.1) is arranged in a detection plane, which is suitable to generate the first scanning signals ($INC_{G1}$) in the form of rough incremental signals ($INC_{G1}$) comprising a rough signal period ($SP_G$) and
     - an absolute position signal detector arrangement (24.4) is arranged in the detection plane, which is suitable to generate the second scanning signals (ABS) in the form of an absolute position signal (ABS) and
     - a second incremental signal detector arrangement (24.2, 24.3) is arranged in the detection plane, which is suitable to generate the third scanning signals ($INC_{G2}$) in the form of second rough incremental signals ($INC_{G2}$) comprising the rough signal period ($SP_G$) and

   - wherein the scanning unit (20) further comprises a scanning plate (23), which

     - comprises at least one scanning structure (23.2, 23.3), which is assigned to the second incremental signal detector arrangement (24.2, 24.3) in the scanning light path and
     - comprises at least one transparent window area (23.1), which is assigned to the first incremental signal detector arrangement (24.1) in the scanning light path so that the first and second rough incremental signals ($INC_{G1}$, $INC_{G2}$) encompass a different pitch behavior.

4. The position measuring device according to claim 3, wherein the scanning plate (23) comprises a further transparent window area (23.4), which is assigned to the absolute position signal detector arrangement (24.4).

5. The position measuring device according to claim 3, wherein the second incremental signal detector arrangement (24.2, 24.3) comprises at least one detector unit, which is arranged in measuring direction (x) adjacent to the first incremental signal detector arrangement (24.1).

6. The position measuring device according to claim 5, wherein the detector unit is embodied as structured detector arrangement, which consists of a plurality of rectangular detector elements, which supply phase-different partial incremental signals.

7.  The position measuring device according to claim 6, wherein the second incremental signal detector arrangement (24.2, 24.3) comprises two detector units, which are embodied identically and which are arranged in measuring direction (x) adjacent to the first incremental signal detector arrangement (24.1).

8.  The position measuring device according to claim 6, wherein the scanning structure (23.2, 23.3) comprises periodically arranged apertures, the maximal width ($b_{AS}$) of which in measuring direction (x) is chosen to be smaller than the width ($b_{DET}$) of the assigned detector elements in the structured detector arrangements of the second incremental signal detector arrangement (24.2a, 24.2b).

9.  The position measuring device according to claim 8, wherein the apertures encompass limitations, which correspond to the course of a sine function.

10. The position measuring device according to claim 3, wherein the incremental track (12) on the scale (10) encompasses a first incremental spacing comprising a rough spacing period ($TP_G$) and a second incremental spacing comprising a fine spacing period ($TP_F$) and the two spacing periods ($TP_G$, $TP_F$) have an integral relationship to one another.

11. The position measuring device according to claim 10, wherein the first incremental signal detector arrangement (24.1) is furthermore suitable to generate fine incremental signals ($INC_F$) comprising a fine signal period ($SP_F$).

12. A method for operating a position measuring device consisting of a scale (10) and a scanning unit (20), which can be displaced in a measuring direction (x) relative to the scale (10),

    - wherein at least a first and a second track (12, 13) comprising consecutive partial areas of different reflectivity are arranged on the scale (10), from the scanning of which track a first and a second position-dependent scanning signal ($INC_{G1}$, ABS) are generated by means of the scanning unit (20) and
    - in the case of a pitch of the scanning unit (20) or of the scale (10), the first and second scanning signals ($INC_{G1}$, ABS) generated from the different tracks (12, 13), encompasses a different pitch behavior, due to pitch displacements of the scanning unit (20) or of the scale (10) about an axis, which is oriented in the scale plane or parallel to the scale plane and at right angles to the measuring direction (x), to the effect that the first scanning signal ($INC_{G1}$) then specifies an incorrect position, while the second scanning signal (ABS) continues to specify a correct position and
    - that a third scanning signal ($INC_{G2}$), which encompasses a different pitch behavior than the other scanning signal ($INC_{G1}$), which is generated from this track (12, 13), is generated from one of the two tracks (12, 13) and
    - the two scanning signals ($INC_{G1}$, $INC_{G2}$) generated from one track are compared to one another for detecting a possible pitch.

13. The method according to claim 12, wherein the third generated scanning signal ($INCG_2$) encompasses a similar pitch behavior as the scanning signal (ABS) from the respective other track (12, 13).

14. The method according to claim 12, wherein the phase difference ($\Delta_{G1-G2}$) is formed from the first and third scanning signal ($INC_{G1}$, $INC_{G2}$) for comparing the first and third scanning signal ($INC_{G1}$, $INC_{G2}$).

15. The method according to claim 15, wherein the phase difference ($\Delta_{G1-G2}$) is monitored to the effect that a maximally permissible phase difference ($\Delta_{G1-G2, \, max}$) is not exceeded.

16. The method according to claim 15, wherein the maximally permissible phase difference ($\Delta_{G1-G2, \, max}$) is chosen to the same as half of the signal period ($SP_G/2$) of the first scanning signal ($INC_{G1}$).

17. The method according to claim 12, wherein a correction of the relative spatial orientation of scale (10) and scanning unit (20) is carried out on the basis of the result of the comparison when a maximally permissible pitch is exceeded.

18. The method according to claim 12, wherein a warning signal is generated when the result of the comparison indicates the exceeding of a maximally permissible pitch.

**Revendications**

1. Dispositif de mesure de position, constitué d'une échelle (10) et d'une unité exploratrice (20) déplaçable par rapport à l'échelle (10) dans une direction de mesure (x),

   - dans lequel au moins une première et une deuxième trace (12, 13), avec des portions consécutives à réflectivité variable, et dont l'exploration à l'aide de l'unité exploratrice (20) permet de produire un premier et un deuxième signal d'exploration ($INC_{G1}$, ABS) en fonction de la position, sont prévues sur l'échelle (10), et
   - l'unité exploratrice (20) est conçue de telle manière, qu'un troisième signal d'exploration ($INC_{G2}$) peut être produit à partir des deux traces (12, 13), présentant un comportement de tangage variable, en raison des mouvements de tangage de l'unité exploratrice (20) ou de l'échelle (10) autour d'un axe orienté vers le niveau de l'échelle ou parallèlement au niveau de l'échelle et perpendiculairement à la direction de mesure (x), tout comme l'autre signal d'exploration ($INC_{G1}$) produit à partir de cette trace (12, 13), où le parcours du faisceau explorateur pour la production du troisième signal d'exploration ($INC_{G2}$) se distingue du parcours du faisceau explorateur de l'autre signal d'exploration ($INC_{G1}$) susceptible d'être produit à partir de cette trace (12, 13), et
   - le dispositif de mesure de position est par ailleurs attribué à une unité comparatrice, permettant de comparer entre eux les deux signaux d'exploration ($INC_{G1}$, $INC_{G2}$) produits à partir de la trace, pour la détection d'un éventuel basculement de tangage.

2. Dispositif de mesure de position selon la revendication 1, dans lequel le troisième signal produit ($INC_{G2}$) présente un comportement de tangage semblable à celui du signal d'exploration (ABS) correspondant à l'autre trace (12, 13).

3. Dispositif de mesure de position selon la revendication 1, dans lequel

   - sur l'échelle (10)

     - une trace absolue (13) s'étendant dans la direction de mesure (x), avec un codage absolu, est prévue en tant que première trace (13), et
     - une trace incrémentielle (12) s'étendant dans la direction de mesure (x), parallèlement à la trace absolue (13), avec une graduation incrémentielle, est prévue en tant que deuxième trace (12), de même que

   - sur les côtés de l'unité exploratrice (20)

     - un premier dispositif de détection de signaux incrémentiels (24.1), adapté à la production des premiers signaux d'exploration ($INC_{G1}$) sous la forme de signaux incrémentiels grossiers ($INC_{G1}$) avec une période de signal grossière ($SP_G$) , est disposé dans un plan de détection, et
     - un dispositif de détection de signaux absolus (24.4), adapté à la production des deuxièmes signaux d'exploration (ABS) sous la forme de signaux de position absolus (ABS), est disposé dans le plan de détection, et
     - un deuxième dispositif de détection de signaux incrémentiels (24.2, 24.3), adapté à la production des troisièmes signaux d'exploration ($INC_{G2}$) sous la forme de deuxièmes signaux incrémentiels grossiers ($INC_{G2}$) , est disposé dans le plan de détection, et
     - dans lequel l'unité exploratrice (20) comprend par ailleurs une plaque d'exploration (23), qui

       - comprend au moins une structure d'exploration (23.2, 23.3), attribuée au deuxième dispositif de détection de signaux incrémentiels (24.2, 24.3) dans le parcours du faisceau explorateur, et
       - comprend au moins une zone de fenêtre transparente (23.1), attribuée au premier dispositif de détection de signaux incrémentiels (24.1) dans le parcours du faisceau explorateur, de sorte que les premiers et deuxièmes signaux incrémentiels grossiers ($INC_{G1}$, $INC_{G2}$) présentent un comportement de tangage variable.

4. Dispositif de mesure de position selon la revendication 3, dans lequel la plaque d'exploration (23) comprend une autre zone de fenêtre transparente (23.4), à laquelle est attribué le dispositif de détection de signaux de position absolus (24.4).

5. Dispositif de mesure de position selon la revendication 3, dans lequel le deuxième dispositif de détection de signaux incrémentiels (24.2, 24.3) comprend au moins une unité de détection, disposée à côté du premier dispositif de détection de signaux incrémentiels (24.1) dans la direction de mesure (x).

**6.** Dispositif de mesure de position selon la revendication 5, dans lequel l'unité de détection est conçue comme un système de détection structuré, constitué de plusieurs éléments détecteurs rectangulaires, qui fournissent des signaux incrémentiels partiels variables en phase.

**7.** Dispositif de mesure de position selon la revendication 6, dans lequel le deuxième dispositif de détection de signaux incrémentiels (24.2, 24.3) comprend deux unités de détection formées de façon identique, disposées à côté du premier dispositif de détection de signaux incrémentiels (24.1) dans la direction de mesure (x).

**8.** Dispositif de mesure de position selon la revendication 6, dans lequel la structure d'exploration (23.2, 23.3) comprend des ouvertures disposées périodiquement, dont la largeur maximale ($b_{AS}$) dans la direction de mesure (x) est choisie de manière à être inférieure à la largeur ($b_{DET}$) des éléments détecteurs correspondants dans les systèmes de détection structurés du deuxième dispositif de détection de signaux incrémentiels (24.2, 24.3).

**9.** Dispositif de mesure de position selon la revendication 8, dans lequel les ouvertures comportent des délimitations correspondant au trajet d'une fonction sinus.

**10.** Dispositif de mesure de position selon la revendication 3, dans lequel la trace incrémentielle (12) sur l'échelle (10) comporte une première graduation incrémentielle, avec une période de graduation grossière ($TP_G$) et une deuxième graduation incrémentielle avec une période de graduation fine ($TP_F$), et les deux périodes de graduation ($TP_G$, $TP_F$) se trouvant dans un rapport entier.

**11.** Dispositif de mesure de position selon la revendication 10, dans lequel le premier dispositif de détection de signaux incrémentiels (24.1) est en outre adapté à la production de signaux incrémentiels fins ($INC_F$) avec une période de signal fine ($SP_F$).

**12.** Procédé pour le fonctionnement d'un dispositif de mesure de position, constitué d'une échelle (10) et d'une unité exploratrice (20) déplaçable dans une direction (x) par rapport à l'échelle (10),

- dans lequel au moins une première et une deuxième trace (12, 13), avec des portions consécutives à réflectivité variable, et dont l'exploration à l'aide de l'unité exploratrice (20) permet de produire un premier et un deuxième signal d'exploration ($INC_{G1}$, ABS) en fonction de la position, sont prévues sur l'échelle (10), et
- les premiers et deuxièmes signaux d'exploration ($INC_{G1}$, ABS) produits à partir des différentes traces (12, 13) présentent un comportement de tangage variable, dans le cas d'un basculement de tangage de l'unité exploratrice (20) ou de l'échelle (10), en raison de mouvements de tangage de l'unité exploratrice (20) ou de l'échelle (10) autour d'un axe orienté vers le niveau de l'échelle ou parallèlement au niveau de l'échelle et perpendiculairement à la direction de mesure (x), de sorte que le premier signal d'exploration ($INC_{G1}$) fournit alors une position erronée, tandis que le deuxième signal d'exploration (ABS) continue de fournir une position correcte, et
- un troisième signal d'exploration ($INC_{G2}$) est produit à partir des deux traces (12, 13), présentant un comportement de tangage différent de celui de l'autre signal d'exploration ($INC_{G1}$) produit à partir de cette trace (12, 13), et
- les deux signaux d'exploration ($INC_{G1}$, $INC_{G2}$) produits à partir de la trace sont comparés entre eux, pour la détection d'un éventuel basculement de tangage.

**13.** Procédé selon la revendication 12, dans lequel le troisième signal d'exploration ($INC_{G2}$) présente un comportement de tangage semblable à celui du signal d'exploration (ABS) produit à partir de l'autre trace (12, 13).

**14.** Procédé selon la revendication 12, dans lequel, pour la comparaison du premier et du troisième signal d'exploration ($INC_{G1}$, $INC_{G2}$), la différence de phase ($\Delta_{G1-G2}$) est formée à partir du premier et du troisième signal d'exploration ($INC_{G1}$, $INC_{G2}$).

**15.** Procédé selon la revendication 15, dans lequel la différence de phase ($\Delta_{G1-G2}$) est surveillée quant au non dépassement d'une différence de phase maximale autorisée ($\Delta_{G1-G2, max}$).

**16.** Procédé selon la revendication 12, dans lequel une correction de l'orientation spatiale relative de l'échelle (10) et de l'unité exploratrice (20) est effectuée sur la base du résultat de comparaison, lorsqu'un basculement de tangage maximal autorisé est dépassé.

**17.** Procédé selon la revendication 12, dans lequel l'orientation spatiale relative de l'échelle (10) et de l'unité exploratrice (20) est corrigée sur la base des résultats de comparaison, lorsqu'un basculement de tangage maximal autorisé est dépassé.

18. Procédé selon la revendication 12, dans lequel un signal d'alerte est produit lorsque le résultat de comparaison indique le dépassement d'un basculement de tangage maximal autorisé.

FIG. 1

FIG. 2a

FIG. 2b

FIG. 3

23.4

23.2

23

23.1

23.3

$b_{AS}$

Y

X

FIG. 4

FIG. 5a

20

10

φ

20

10

FIG. 5b

INC $_{G1}$

FIG. 5c

INC $_{G2}$

$\Delta_{G1-G2}$

FIG. 5d

ABS

EP 1 271 107 B1

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19505176 A1
- EP 0555507 A1
- EP 1081457 A2
- DE 19908328
- EP 0770850 A2
- DE 19962278
- GB 2116313 A